Europäisches Patentamt

European Patent Office

Office européen des brevets

(11) Publication number: **0 115 370**
A2

(19)

# (12) EUROPEAN PATENT APPLICATION

(21) Application number: **84200111.7**

(22) Date of filing: **27.01.84**

(51) Int. Cl.³: **E 04 G 21/16**
**E 04 F 21/18**

(30) Priority: **28.01.83 NL 8300338**

(43) Date of publication of application:
**08.08.84 Bulletin 84/32**

(84) Designated Contracting States:
**AT BE CH DE FR GB IT LI LU NL SE**

(71) Applicant: **Daan van Baarsen Wandplaten B.V.**
**Gasthuisstraat 23**
**NL-2011 XN Haarlem(NL)**

(72) Inventor: **Penseel, Jacob**
**Gravestein 72**
**NL-2804 GW Gouda(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) A handling apparatus for platelike elements, such as prefab walls.

(57) A handling apparatus for platelike elements, such as prefab walls, comprising a wheeled frame having a substantially vertically directed supporting surface with a substantially horizontally directed supporting edge at its bottom. The supporting surface with the supporting edge is arranged parallel to a wheel shaft along a side edge of the frame. The frame is provided with at least one support wheel spaced behind the supporting surface, and spaced above the frame wheels, said support wheel being mounted in a support lowerable in vertical direction. The supporting surface and supporting edge may have lateral extension members and each support wheel support is preferably movable in a stepless controlled manner.

FIG.1

Title: A handling apparatus for platelike elements, such as prefab walls.

The invention relates to a handling apparatus for platelike elements, such as prefab walls, comprising a wheeled frame having a substantially vertically directed supporting surface with a substantially horizontally directed supporting edge at its bottom, said supporting surface with supporting edge being arranged parallel to a wheel shaft along a side edge of the frame.

Such a handling apparatus is known from US patent 3,540,753 and is used in the building industry for placing prefab partitions of e.g. light concrete in a box-shaped skeleton. The walls have been provided in the factory during their manufacture with hooks received in the wall, by means of which a crane brings the wall to the desired level on the building site. For receiving, transporting and positioning the wall within the box-shaped skeleton, use is made of the above described apparatus. To this end, this is brought with its supporting surface in such a position adjacent an open side of the box-shaped skeleton that the wall can be received, by means of the crane, in a position standing on the supporting edge and resting against the supporting surface. In order to impart a stable position to the wall on the apparatus, it is preferable that the supporting surface is inclined somewhat backwards, which also offers advantages for the displacement of the apparatus with the wall within the box-shaped skeleton, as the height of the wall, with a view to its subsequent function, will only be slightly lower than that of the space through which the wall has to be transported. Due to the somewhat inclined position, which also improves the stability of the wheeled apparatus, which is unilaterally loaded by the wall, the risk of jamming during the transport due to irregularities in the ceiling or floor of the skeleton is reduced. For unloading or depositing the partition, the supporting surface is to be tilted throught its vertical position, for which purpose the supporting surface is mounted pivotally relative to the movable frame by means of a linkage and operating members. For receiving a following partition, the supporting surface is to be returned to its original, backwardly inclined position, which means a loss of time and hence requiresadditional, expensive crane operating time.

In particular when the walls have a relatively small width relative to the maximum width that can be handled, this waiting time entails a considerable drawback. If e.g. the actual width is one third of the maximum width, the waiting time is three times as long as in handling walls having the maximum widths. A further drawback resides in the manner in which partitions have to be received from a crane. To this end, the apparatus should be arranged in such a manner that the supporting surface is substantially outside the box-shaped skeleton, in order to enable the crane to lower a partition until it rests on the supporting edge and beds down on to the supporting surface. Owing to the arrangement of the apparatus at the edge of the floor on which the wheels are supported, as well as the eccentric load of the apparatus, this tends to tilt and therefore has to be retained, which constitutes a considerable safety risk.

It is an object of the invention to eliminate the above drawbacks, while preserving the advantages by providing a handling apparatus with which a wall can be received in a simple and safe manner and be unloaded in a quick, simple and reliable manner with minimal effort. To this end, according to the invention, there is provided a handling apparatus of the above described type, in which the frame comprises at least one support wheel spaced behind the supporting surface and spaced above the frame wheels, the support wheel being mounted in a support which is lowerable vertically. Due to these features, use is made in an advantageous and surprising manner of the unilateral load of the handling apparatus in combination with its specific place of application. The tilting tendency of the handling apparatus during the reception of a wall from a crane can be taken care of by pressing the support wheel against the ceiling in such a manner that the tilting moment exerted by the wall on the handling apparatus is compensated. Naturally, the ceiling wheel has the same retaining function during the transport of a wall. When the wall has to be unloaded, this is possible in a very simple manner by retracting the support wheel or rather by reducing or eliminating the upward pressing of the support wheel, to which effect the support of the support wheel is preferably

movable in a stepless controlled manner. As a result, the weight of the wall tilts the handling apparatus about the wheel shaft arranged at the supporting surface. Due to this tilting movement, not only will the supporting surface move into a forwardly inclined position, but also the supporting edge will be placed in a position forming a sliding surface. Due to this rapid and effective unloading and naturally also loading possibility with a very slight risk of damage, since the various parts can be brought in the optimum unloading position, there is also obtained as a substantial additional advantage, the possibility to proceed more effectively when delivering the walls. Due to the resulting rapid and safe unloading, it becomes possible in an economically advantageous manner, to unload a wall received from a crane in the vicinity of the reception location and to bring the handling apparatus immediately back into the receiving position, so that the crane can continue to operate and need be present at the location in question for a considerably shorter period of time. An additional advantage is that the delivery and assembly of the walls may be less dependent on the weather. To this effect, the delivery of a new parcel of walls should be planned in good time before the completion of the assembly operations of a preceding parcel. Should the weather be such at the delivery date that crane operations are not justified, the delivery can be postponed without resulting in stagnation of the building operations; the assembly of partitions- even under bad weather conditions - can be continued uninterruptedly with the stock still present. The assembly process, consequently, has not only become simpler, quicker and safer by the handling apparatus according to the invention but also substantially less weather-dependent. When manufacturing prebal walls of the type in question, the starting point is mostly a frame with standard deviations determining the maximum width and height of a wall to be erected. Often, however, the desired wall width will not correspond with the maximum width. In that case a plurality of walls are made in a frame in side-by-side relationship, which walls are then handled as a unit as far as the building site, while the lifting operation with the crane takes place wall by wall, in connection with the immediate positioning of the wall after the lifting and reception by the handling apparatus. When, according to a further embodiment of the invention, the supporting edge is provided with coupling means for longitudinal extension of the supporting edge, and the supporting surface spaced above the supporting edge is fitted with laterally extending, longitudinally adjustable support arms, it is possible to lift and receive the above described multi-wall unit, reliably supported in one operation. It is self-explanatory that as a result, the delivery can be effected more quickly and the crane operating time can be still further reduced. In connection with the compactness and convenience of handling of the handling apparatus, even during the transport by the crane from the one reception site to the other and from and to the building site, it is preferable according to a still further embodiment of the invention that the coupling means comprise pivots through which supporting edge extensions are pivotable from a substantially vertical position to a substantially horizontal position, in coextensive relationship with the supporting edge. The lowerable support edge extensions have the additional advantage of a stable location in the position of use due to the pressing engagement against the supporting surface.

The handling of a multi-wall unit, in particular during the forward tilting of the supporting surface during unloading, becomes possible in a reliable manner when according to a still further embodiment of the invention, the support arms are hooked at their free ends and in their longitudinal directions are guided and carried for substantially horizontal sliding movement by the supporting surface, In this respect, allowance can also be made for the desired height of the additional support and the grip of the lateral parts of a unit when according to a still further embodiment of the invention, the support arms with guides are movable in their entirety in vertical direction.

One embodiment of the handling apparatus according to the invention will now be described, by way of example, with reference to the accompanying drawings, in which:

Fig. 1 is a side view of a handling apparatus; and

Fig. 2 is a front view of the handling apparatus shown in Fig. 1.

The drawings show a handling apparatus comprising a frame 1 movable by means of two wheels 2 rotatable about a shaft 3 and a wheel 4 rotatable about a shaft 5. The shafts 3 are each mounted in a support 6 rigidly connected to frame 1, while the shaft 5 is mounted in a support 7 rigidly connected to the frame 1 and fitted with an axial bearing 8, so that the wheel 4 is rotatable both about the horizontal shaft 5 and about a vertical shaft relative to the frame 1.

An arm 10 rotatable about a shaft 9 is pivoted to each support 6. The two arms 10 are interconnected by a beam 11 to which a support 12 is rigidly attached, centrally between the two arms 10, said support 12 extending horizontally rearwards. In the support 12 there is mounted a pivot pin 13 carrying the end of a piston rod 14. The piston rod 14 extends into a cylinder 15 coupled by means of a coupling rod 16 and a pivot pin 17 to a support 18 rigidly connected to the frame 1.

A guiding piece 19 is slidable over each arm 10 in longitudinal direction of the arm 10. Each guiding piece 19 carries a supporting surface beam 20 extending parallel to the arm 10. The supporting surface beams are interconnected by a supporting edge support beam 21, a beam 22 and a support arm beam 23.

The beam 21 carries at its bottom a projecting supporting edge 24, which, in a number of places 25, two of which are shown in the drawings, comprises recesses, imparting a tooth form to the supporting edge. On either side of the beam 21 with edge 25, there is provided a similar extension beam 26 with edge 27, which are hinged to the beam 21 by means of line pivots 28.

Centrally between the beams 20, beam 22 carries a support 29 with shaft 30, on which the end of a piston rod 31 is pivotally arranged. The piston rod 31 extends into a cylinder 32, which is pivoted to the shaft 13 of the support 12 by means of a connecting piece 33.

The beam 23 is provided on both ends with telescopic support arms 34, which in their extended position are securable relative to the beam 23, each carrying a hook 35 at its end.

Above the support 7 of the wheel 4, a tube 36 is arranged vertically on the frame 1 and rigidly connected to the frame 1. A further tube 37 is telescopically slidable in the tube 36 in guided relationship. By means of a locking pin 38 and suitable bores in the tubes 36, 37, these are lockable in certain positions relatively to one another. The tube 37 telescopically guides a further tube 39 carrying at its end a fork 40 wherein a shaft 41 of a support wheel 42 is mounted. The tube 37 comprises lugs 43 for mounting a shaft 44 carrying a connecting piece 45 of a cylinder 46. A piston rod 47 extends into the cylinder 46 and is pivoted at its end, by means of a shaft 48, to lugs 49 rigidly connected to the tube 39.

The one end of a rod 51 is pivoted to the exterior of each guiding piece 19 by means of a shaft 50, while the other end of each rod 51 is rigidly connected to a guide rod 52. A further rod 53, adjacent the attachment location of each rod 51, is rigidly connected on the one end to the guide rod 52 and on the other end pivoted to the frame 1 by means of a shaft 54.

The operation of the above described handling apparatus is as follows.

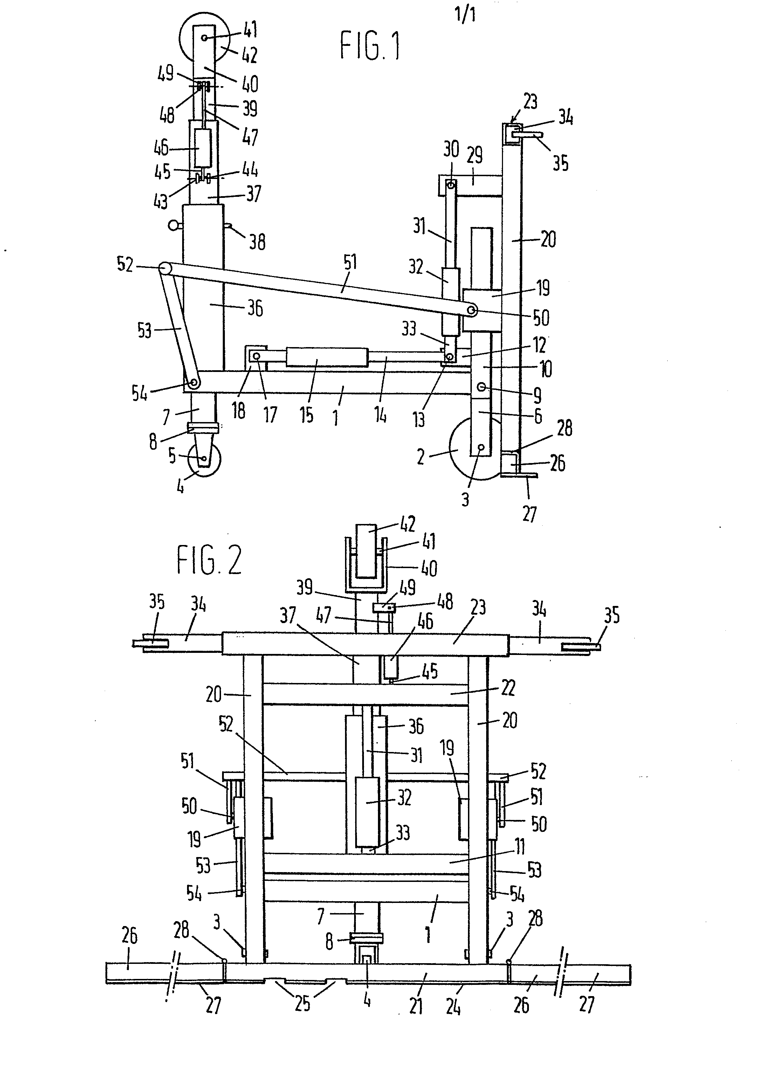

The reception of a wall by the handling apparatus takes place in the position of the apparatus shown in Fig.1, in which, by means of the coarse setting (tubes 36, 37 and the locking pin 38) and the fine setting (tubes 37, 39 and cylinder 46) the support wheel 42 has been lifted so high as to make contact with a ceiling of a box-shaped building skeleton. For the purpose of receiving a partition, the handling apparatus is moved so that its supporting surface, formed by the beams 20, 21, 22 and 23 with supporting edge 24, is outside or substantially outside the skeleton, which is promoted among other things by giving a relatively large diameter to the wheels 2. Depending on the width of the wall or unit composed of a number of walls, to be received, the beams 26 with supporting edges 27 are or are not collapsed and the support arms 34 are extended or not. In this position, the handling apparatus is optimally accessible to the crane-suspended, supplied wall.

After the positioning of a wall on the supporting edge 25, 25 and 27, respectively, the support arms are shifted in such a manner that the hooks 35 embrace and grip the wall on both ends, after which the coupling between the wall and the crane is disconnected. The introduction of the wall within the skeleton is then effected by pulling the handling apparatus backwards, for which purpose use can be made of the guide rod 52.

When a plurality of walls or units composed of walls have to be received within a short period of time, the wall received will be placed against an adjacent sidewall of the skeleton or against walls already placed thereagainst. This is effected by bringing the wall received in a position parallel to the sidewall and by relieving the cylinder 46, so that the tilting moment exerted by the wall on the handling apparatus is no longer taken up and the handling apparatus tilts about the shaft 3, with the wheel 4 being detached from the floor. This results in a forward inclination of the supporting surface, while problems at the front of the supporting edge are avoided by slightly lifting the supporting surface and the said edge by means of cylinder 32. After reaching the desired degree of inclination and the desired deposition position of the wall by movement of the handling apparatus, the support arms 34 are extended until the hooks 35 release the wall. When retracting the handling apparatus, the wall is then left behind without or substantially without sliding movement.

When the movement of the wall within the skeleton entails problems due to irregularities in ceiling or floor, in particular when the wall threatens to be jammed, the supporting surface is tiltable backwards by means of the cylinder 15. This tilted position is preferable during larger displacements, e.g. when bringing the wall to the assembly location within the skeleton. Ceiling and/or floor deviations could also create problems at the support wheel 42. Such problems, jamming or excessive play, can be remedied in a simple manner by means of the cylinder 46. Due to the possible vertical steering of the support wheel 42 and the tilting control of the supporting surface, the latter, independently of the varying height, if any, between ceiling and floor, can always be brought accurately in the desired position.

It is self-evident that many modifications and variants are possible within the scope of the invention. For instance, hydraulic cylinders - for that matter without the feed and control means required therefor - are shown for effecting a number of displacements; naturally, other jack means are also possible, whether or not manually operated. Besides, drive means for moving the handling apparatus may be provided. Furthermore, each beam 27 may consist of a plurality of pivotally connected parts, while, moreover, the pivot pin may extend vertically, so that the beam or beam portions are pivotable backwards. Adjacent the pivot, locking means may be provided. Naturally, more than one support wheel 42 may be present. Just like the wheel 4, each support wheel 42 may be rotatable about a vertical shaft by means of an axial bearing. Besides, further support arms with hooks may be provided between the supporting edge and the support arms, while the beams can be telescopic with a locking device, e.g. in the manner as the tubes 37, 38.

**0115370**

CLAIMS

1.      A handling apparatus for platelike elements, such as prefab walls, comprising a wheeled frame having a substantially vertically directed supporting surface with a substantially horizontally directed supporting edge at its bottom, said supporting surface with supporting edge being arranged parallel to a wheel shaft along a side edge of the frame, characterized in that the frame is provided with at least one support wheel spaced behind the supporting surface, and spaced above the frame wheels, said support wheel being mounted in a support lowerable in vertical direction.

2.      A handling apparatus according to claim 1, characterized in that the supporting edge comprises coupling means for extension of the supporting edge in longitudinal direction and the supporting surface is fitted with laterally extending, longitudinally adjustable support arms at a point spaced above the supporting edge.

3.      A handling apparatus according to claim 2, characterized in that the coupling means comprise pivots through which supporting edge extensions are pivotable from a substantially vertical position into a substantially horizontal position in alignment with the supporting edge.

4.      A handling apparatus according to claim 2 or 3, characterized in that the support arms are hooked at their free ends and in their longitudinal directions are guided and carried for substantially horizontal sliding movement by the supporting surface.

5. A handling apparatus according to claim 4, characterized in that the support arms with guides are movable in their entirety in vertical direction.

6. A handling apparatus according to any one of the preceding claims, characterized in that the support wheel support is movable in a stepless controlled manner.

FIG.1

FIG.2